# EUROPÄISCHE PATENTSCHRIFT

(11) **EP 3 147 477 B1**
(45) Veröffentlichungstag und Bekanntmachung des Hinweises auf die Patenterteilung: **17.10.2018**
(21) Anmeldenummer: 16184417.0
(22) Anmeldetag: 17.08.2016
(51) Int. Cl.: F02B 25/02, F02D 19/02, F02D 19/06, F02M 21/02, F02F 1/00

(54) **GASZUFÜHRSYSTEM UND ZYLINDERLINER FÜR EINE HUBKOLBENBRENNKRAFTMASCHINE, HUBKOLBENBRENNKRAFTMASCHINE, SOWIE VERFAHREN ZUM BETREIBEN EINER HUBKOLBENBRENNKRAFTMASCHINE**
GAS FEEDING SYSTEM AND CYLINDER FOR A RECIPROCATING PISTON ENGINE, RECIPROCATING COMBUSTION ENGINE, AND METHOD FOR OPERATING SAME
SYSTÈME D'ALIMENTATION EN GAZ ET CHEMISE DE CYLINDRE POUR UN MOTEUR À COMBUSTION INTERNE À PISTON ÉLÉVATEUR, MOTEUR À COMBUSTION INTERNE À PISTON ÉLÉVATEUR, AINSI QUE PROCÉDÉ DE FONCTIONNEMENT D'UN MOTEUR À COMBUSTION INTERNE À PISTON ÉLÉVATEUR

(30) Priorität: 23.09.2015 EP 15186519
(43) Veröffentlichungstag der Anmeldung: 29.03.2017
(73) Patentinhaber: Winterthur Gas & Diesel AG, 8401 Winterthur (CH)
(72) Erfinder: Ott, Marcel, 8406 Winterthur (CH); Hensel, Sebastian, 8400 Winterthur (CH); Nylund, Ingemar, 66580 Kuni (FI); Hattar, Christer, 65230 Vasa (FI)
(74) Vertreter: Intellectual Property Services GmbH

(56) Entgegenhaltungen:
- EP-A1- 2 602 460
- EP-A1- 2 891 780
- EP-A1- 2 891 790
- EP-A2- 1 770 257
- WO-A2-2013/007863
- DE-A1-102011 003 909
- JP-A- 2001 115 845
- US-A1- 2004 103 877

## Beschreibung

Die Erfindung betrifft eine Gaszuführung für eine Hubkolbenbrennkraftmaschine, eine Hubkolbenbrennkraftmaschine und einen Zylinder mit einer Gaszuführung, im Speziellen für einen längsgespülten Zweitakt-Grossdieselmotor, sowie ein Verfahren zum Betreiben einer Hubkolbenbrennkraftmaschine gemäss dem Oberbegriff des unabhängigen Anspruchs der jeweiligen Kategorie.

Grossdieselmotoren werden häufig als Antriebsaggregate für Schiffe oder auch im stationären Betrieb, z.B. zum Antrieb grosser Generatoren zur Erzeugung elektrischer Energie eingesetzt. Dabei laufen die Motoren in der Regel über beträchtliche Zeiträume im Dauerbetrieb, was hohe Anforderungen an die Betriebssicherheit und die Verfügbarkeit stellt. Daher sind für den Betreiber insbesondere lange Wartungsintervalle, geringer Verschleiss und ein wirtschaftlicher Umgang mit Brenn- und Betriebsstoffen zentrale Kriterien für den Betrieb der Maschinen. Unter anderem ist das Kolbenlaufverhalten solcher grossbohrigen langsam laufenden Dieselmotoren ein bestimmender Faktor für die Länge der Wartungsintervalle, die Verfügbarkeit und über den Schmiermittelverbrauch auch unmittelbar für die Betriebskosten und damit für die Wirtschaftlichkeit.

Ein weiterer wesentlicher Punkt ist seit einigen Jahren mit zunehmender Bedeutung die Qualität der Abgase, insbesondere die Stickoxid Konzentration in den Abgasen. Hier werden die rechtlichen Vorgaben und Grenzwerte für die entsprechenden Abgasgrenzwerte zunehmend verschärft und in naher Zukunft auch noch weiter verschärft werden. Das hat insbesondere bei Zweitakt-Grossdieselmotoren zur Folge, dass die Verbrennung des klassischen, mit Schadstoffen hoch belasteten Schweröls, aber auch die Verbrennung von Dieselöl oder anderen Brennstoffen zunehmend problematischer wird, weil die Einhaltung der Abgasgrenzwerte immer schwieriger, technisch aufwändiger und damit teurer wird oder am Ende deren Einhaltung gar nicht mehr sinnvoll möglich ist, so dass die entsprechenden Motoren ausser Betrieb genommen oder zumindest aufwändig umgerüstet werden müssen.

In der Praxis besteht daher bereits seit langem das Bedürfnis nach sogenannten "Dual Fuel" Motoren, also Motoren, die mit zwei unterschiedlichen Brennstoffen betrieben werden können. Dabei soll häufig einerseits Gas, z.B. in Form eines Erdgases, beispielsweise ein sogenanntes "liquefied natural gas" (LNG), oder ein Gas in Form eines Autogases oder eines anderen zum Antrieb einer Brennkraftmaschine geeigneten Gases verbrannt werden, und andererseits soll auch noch ein anderer Brennstoff wie Benzin, Diesel, Schweröl oder ein anderer geeigneter flüssiger Brennstoff in ein und demselben Motor verbrannt werden können. Die Motoren können dabei sowohl Zweitakt- als auch Viertaktmotoren sein und es kann sich dabei um kleine, mittelgrosse aber auch um Grossmotoren, insbesondere auch um längsgespülte Zweitakt-Grossdieselmotoren handeln, wie sie zum Beispiel als Antriebsaggregate in Schiffen verwendet werden oder auch zur Herstellung elektrischer Energie in Kraftwerken häufig eingesetzt werden.

Im Rahmen dieser Anmeldung umfasst der Begriff "Grossdieselmotor" oder ähnliche Begriffe auch solche Grossmotoren, die neben dem Dieselbetrieb, der durch die Selbstzündung des Brennstoffes gekennzeichnet ist, auch in einem Ottobetrieb betrieben werden können, der durch Fremdzündung des Brennstoffes gekennzeichnet ist, oder in Mischformen dieser beiden Betriebsarten.

Aber auch reine Gasmotoren, also Motoren, die nur mit Gas und nicht alternativ noch mit Diesel, Schweröl oder einem anderen Brennstoff betreibbar sind werden zunehmend nachgefragt, insbesondere dann, wenn hohe Abgasstandards gefordert sind, die mit vertretbarem technischen Aufwand wirtschaftlich sinnvoll nur durch die Verbrennung von Gas eingehalten werden können. Ein solcher reiner Gasmotor ist beispielweise in der WO 2010 147071 A1 angegeben. Weiterer Stand der Technik findet sich z.B. in der DE 10 2010 005814 A1.

Ganz gleich ob es sich um einen Dual-Fuel Motor oder um einen reinen Gasmotor handelt, ist der Vorgang der Einbringung des Brennstoffs Gas in den Brennraum des Zylinders einer entsprechenden Hubkolbenbrennkraftmaschine von entscheidender Bedeutung für den zuverlässigen und sicheren Betrieb eines solchen Motors.

Das Gaszuführsystem zum Zuführen des Brennstoffs Gas in den Brennraum der Hubkolbenbrennkraftmaschine hat dabei ein Vielzahl von verschiedenen Funktionen, die sich zudem in gewisser Weise untereinander beeinflussen, so dass die verschiedenen Teil-Funktionalitäten genau aufeinander abgestimmt werden müssen. Ausserdem kann die genaue Ausgestaltung des Gaszuführsystems z.B. unter anderem von einem gegebenen oder bevorzugten Betriebszustand abhängen, beispielsweise, ob der Motor meistens im Vollast- oder Teillastbereich betrieben wird oder häufig zwischen diesen Betriebsarten gewechselt werden muss. Oder ob es sich z.B. um einen Dual-Fuel Motor oder um einen reinen Gasmotor handelt. Oder die konkrete Ausgestaltung des Gaszuführsystems kann auch von der Baugrösse des Motors, dessen Leistung, Hubraum, bevorzugtem Drehzahlbereich oder anderen dem Fachmann an sich bekannten Bauvarianten oder Betriebszuständen einer Hubkolbenbrennkraftmaschine abhängen.

Insbesondere bei Zweitakt-Grossdieselmotoren, wie z.B. aus dem Dokument WO 2013/007863 A2 bekannt, hat dabei das Gaszuführsystem nicht nur die Funktion, die in den Brennraum des Motors einzubringende Menge an Gas zu dosieren, so wie es bei Viertakt-Motoren oft eine ausreichende Anforderung ist. Bei Zweitakt-Grossdieselmotoren ist unter anderem neben weiteren Anforderungen die korrekte und zuverlässige Mischung des durch das Gaszuführsystem eingebrachten Gases mit der Spülluft ein entscheidender Punkt.

Ein weiterer wesentlicher Punkt betrifft die Betriebssicherheit des Motors. Im Falle dass das Gaszuführsystem ganz oder teilweise versagt, ist es möglich, dass z.B. eine viel zu grosse Menge an Gas in den Brennraum des Motors eingebracht wird, wenn keine geeigneten Sicherheitsmassnahmen getroffen werden, die das verhindern. Solche übermässig grossen Mengen Gas im Brennraum des Motors können z.B. zu unkontrollierten Explosionen im Abgassystem oder im Spülsystem eines Grossdieselmotors führen, was dazu führen kann, dass die entsprechenden Komponenten überhitzt oder gar beschädigt werden, so dass im schlimmsten Fall die ganze Maschine ausfallen kann, was insbesondere bei Schiffen auf hoher See fatale Folgen und sogar den Verlust des ganzen Schiffes zur Folge haben kann.

Aber auch wenn die Folgen einer solchen Fehlfunktion nicht so dramatisch sind, können auch weniger gravierende Störungen dieser Art unerwünschte Nachteile mit sich bringen.

Wenn beispielweise aufgrund eines Defektes das Gaszuführsystem jeweils eine etwas zu grosse oder eine etwas zu kleine Menge an Gas in den Brennraum des Motors eingebracht wird, kann das die Abgaswerte, wie beispielweise den Stickoxidgehalt oder andere Abgaswerte deutlich negativ beeinflussen.

Oder aber beim Betrieb mit einem Gas, z.B. mit dem oben erwähnten LNG, kann es bei einer Fehlfunktion des Gaszuführsystems beispielweise zu einer unvollständigen Verbrennung und damit zu einem dem Fachmann als CH₄-Schlupf bekannten Phänomen führen, bei welchem zu hohe Werte CH₄-erreicht werden. Wenn ein entsprechender Motor nun mit Gas, also in einem Gasmodus betrieben wird, können die unter einer Fehlfunktion des Gaszuführsystems bei der Verbrennung entstehenden Abgase unter anderem nicht unerhebliche Mengen Methan und / oder Formaldehyd Emissionen enthalten, die zum Beispiel aus einer spontanen Abkühlung der Verbrennungsflamme ("flame quenching") beim Verbrennungsvorgang an der Zylinderwand resultieren können oder in einer Phase frei werden können, in der die Spülung des Zylinders mit Frischluft bei gleichzeitig nicht geschlossenem Auslassventil stattfindet oder in anderer Weise frei werden können.

Ähnliche Effekte können auftreten, wenn das Gas in nicht geeigneter Weise, z.B. unter einem ungeeigneten Druck oder in einer ungeeigneten Geometrie des Einspritzstrahls, unter einem ungeeigneten Winkel, an einer ungeeigneten Stelle in den Brennraum oder in irgendeiner anderen Weise ungeeignet in den Brennraum des Motors eingebracht wird.

Wenn durch solche Betriebszustände z.B. die Methan Konzentration im Abgas entsprechend hoch ist, kann dadurch der sichere Betrieb des Motors ebenfalls beeinträchtigt werden. Zum Beispiel besteht die Gefahr, dass sich das Methan im Abgassystem, z.B. im Abgassammelrohr bzw. in einem Bereich vor oder gar im Turbolader entzündet. Im schlimmsten Fall kann die Entzündung des Methans im Abgassystem zur Beschädigung entsprechender Komponenten führen, die den schädlichen Wirkungen der Methangasentzündung ausgesetzt sind. Ausserdem ist Methan ein überaus wirksames Treibhausgas, das bekannterweise mindestens 25-mal wirksamer ist als Kohlendioxid, was einen signifikanten negativen Einfluss auf die Berechnung des sogenannten "Energy Efficiency Design Index" (EEDI) haben kann.

Auch können die häufig eingesetzten und sehr empfindlichen Oxidationskatalysatoren durch eine Fehlfunktion des Abgaszuführsystems und die daraus resultieren Folgen erheblich beeinträchtigt und im schlimmsten Fall bereits nach kurzer Zeit irreparabel beschädigt werden, wodurch der weitere sichere und zuverlässige Betrieb des Motors zumindest in Frage gestellt ist, im schlimmsten Fall verunmöglicht wird.

Die Aufgabe der Erfindung ist es somit, ein Gaszuführsystem, einen Zylinderliner für einen längsgespülten Zweitakt-Grossdieselmotor mit einem Gaszuführsystem, bzw. eine Hubkolbenbrennkraftmaschine, insbesondere einen längsgespülten Zweitakt-Grossdieselmotor mit einem Gaszuführsystem zur Verfügung zu stellen, das bzw. welche flexibel an unterschiedliche Motoren bzw. unterschiedliche Betriebszustände und Anforderungen anpassbar ist bzw. sind, so dass dies eventuell auch in bestimmten Fällen in älteren Motoren nachgerüstet werden kann, bzw. bestehende Motoren flexibel und einfach auf andere Betriebsarten oder Betriebszustände umgerüstet bzw. umgestellt werden können. Dabei soll das sichere Einbringen des Gases in den Brennraum der Hubkolbenbrennkraftmaschine zuverlässig gewährleistet sein und insbesondere, aber nicht nur im Fall von längsgespülten Zweitakt-Grossdieselmotoren im Brennraum eine optimale Mischung mit der Spülluft gewährleistet werden.

Die diese Aufgaben lösenden Gegenstände der Erfindung sind durch die Merkmale der unabhängigen Ansprüche gekennzeichnet. Die jeweiligen abhängigen Ansprüche beziehen sich auf besonders vorteilhafte Ausführungsformen der Erfindung.

Die Erfindung betrifft somit einen Zylinderliner für einen längsgespülten Zweitakt-Grossdieselmotor mit einer Gaseinlassdüse, wobei die Gaseinlassdüse integraler Bestandteil des Zylinderliners ist und als Bohrung in dem Zylinderliner ausgestaltet ist, wobei eine Düsenachse der Gaseinlassdüse derart unter einem vorgebbaren Winkel in Bezug auf eine radiale Richtung des Zylinderliners angeordnet ist, dass das Brenngas unter einem von Null verschiedenen Winkel in Bezug auf die radiale Richtung in den Brennraum einspritzbar ist.

Die Erfindung betrifft ferner ein Gaszuführsystem für eine Hubkolbenbrennkraftmaschine, insbesondere längsgespülter Zweitakt-Grossdieselmotor, wobei das Gaszuführsystem ein Gaseinlassventil mit einer Gaseinlassdüse sowie einen Zylinderliner umfasst, und so ausgestaltet ist, dass es an einem Zylinder der Hubkolbenbrennkraftmaschine derart angeordnet werden kann, dass ein als Treibstoff bereitgestelltes Brenngas im Einbauzustand des Gaszuführsystems mittels der Gaseinlassdüse einem Brennraum des Zylinders zuführbar ist. Dabei umfasst das Gaseinlassventil einen in einem Ventilgehäuse angeordneten Druckraum, in welchem das Brenngas über eine Gaszuführung zur Bevorratung und Zufuhr in die Gaseinlassdüse im Betriebszustand bereitgestellt werden kann. Im Druckraum ist ein Ventilkörper mit einem an einem Ventilschaft angeordneten Ventilteller sowie einem Ventilsitz vorgesehen, welcher Ventilsitz in einem geschlossenen Zustand des Ventilkörpers mit dem Ventiltellers derart dichtend zusammenwirkt, dass die Zufuhr des Brenngases aus dem Druckraum in die Gaseinlassdüse unterbunden ist, und der Ventilteller mittels eines mit dem Ventilschaft wirkverbundenen Ventilantriebs vom Ventilsitz abhebbar ist, so dass das Brenngas in einem geöffneten Zustand des Ventilkörpers aus dem Druckraum am Ventilteller vorbei der Gaseinlassdüse zuführbar ist. Erfindungsgemäss ist die Gaseinlassdüse integraler Bestandteil des Zylinderliners und als Bohrung in dem Zylinderliner ausgestaltet, wobei eine Düsenachse der Gaseinlassdüse derart unter einem vorgebbaren Winkel in Bezug auf eine Ventilachse des Gaseinlassventils angeordnet, dass das Brenngas im Betriebs- und Einbauzustand des Gaszuführsystems unter einem von Null verschiedenen Winkel in Bezug auf eine radiale Richtung des Zylinders in den Brennraum des Zylinder einspritzbar ist.

Mit dem Einspritzwinkel wird dann derjenige Winkel bezeichnet, welcher der Supplementärwinkel zu dem Winkel zwischen der Düsenachse der Gaseinlassdüse und der Ventilachse des Gaseinlassventils ist, das heisst, der Einspritzwinkel und der Winkel zwischen Düsenachse und Ventilachse ergänzen sich zu 180°. Bevorzugt beträgt der Einspritzwinkel zwischen 10 Grad und 80 Grad, besonders bevorzugt zwischen 10 Grad und 35 Grad, im speziellen ist der Einspritzwinkel ca. 22.5 Grad.

Ein erfindungsgemässes Gaszuführsystem umfasst somit ein Ventil, das als wesentliche Elemente einen Ventilschaft mit einem Ventilteller aufweist, wobei durch das meist hydraulisch gesteuerte Ventil die gewünschte Menge an Gas über den Ventilteller, der im geschlossenen Zustand dichtend mit einem Ventilsitz zusammenwirkt, und eventuell durch Düsen und einen geeigneten Düsenkanal in den Brennraum eingebracht wird.

Damit steht durch die vorliegende Erfindung ein Gaszuführsystem zum Zuführen des Brennstoffs Gas in den Brennraum einer Hubkolbenbrennkraftmaschine zur Verfügung, das durch seine zweiteilige Ausgestaltung, nämlich mit dem Gaseinlassventil und der als Bohrung im Zylinderliner ausgestalteten Gaseinlassdüse, eine bisher nicht gekannte Flexibilität aufweist. Dadurch, dass die Gaseinlassdüse integraler Bestandteil des Zylinderliners ist, also als Bohrung im Zylinderliner ausgestaltet ist, ergibt sich eine besonders einfache Konstruktion, weil auf die Anfertigung einer separaten Gaseinlassdüse verzichtet werden kann, die dann auch noch mit dem Gaseinlassventil verbunden werden müsste. So kann die Gaseinlassdüse in einfacher Weise durch eine entsprechende Bohrung im Zylinderliner zum Beispiel je nach Anforderungen an die speziellen Brennbedingungen im Brennraum der Hubkolbenbrennkraftmaschine gefertigt werden, so dass verschiedene Einspritzbedingungen zum Einspritzen des Brenngases in den Brennraum einfach realisiert werden können und optimal auf die jeweiligen Anforderungen abgestimmt werden können.

Darüber hinaus ist eine Düsenachse der Gaseinlassdüse der vorliegenden Erfindung derart unter einem vorgebbaren Winkel in Bezug auf eine Ventilachse des Gaseinlassventils angeordnet, dass das Brenngas im Betriebs- und Einbauzustand des Gaszuführsystems unter einem von Null verschiedenen vorgebbaren Einspritzwinkel in den Brennraum des Zylinder einspritzbar ist. Das ist daher von besonderer Bedeutung, weil dadurch den beiden Hauptfunktionen der Gaseinlassdüse gleichzeitig Rechnung getragen wird: einerseits ist durch Verwendung einer an die Bedingungen im Brennraum angepassten Gaseinlassdüse eine exakte Dosierung unter den verschiedensten Betriebsbedingungen möglich. Und andererseits kann durch die korrekte Wahl des Einspritzwinkels und die richtige Wahl der Geometrie des Einspritzstrahls bzw. mehrerer Einspritzstrahlen eine optimale Mischung von Spülluft und Brenngas erreicht werden, so dass eine optimale Verbrennung gewährleistet ist, so dass insbesondere die geforderten Abgasnormen eingehalten werden können und andererseits der Verbrauch an Treibstoff minimiert werden kann.

Das heisst, eine Vielzahl von verschiedenen Funktionen, die sich zudem in gewisser Weise untereinander beeinflussen, können durch die vorliegende Erfindung genau aufeinander abgestimmt werden. So kann z.B. durch die genaue Ausgestaltung des Gaszuführsystems, im speziellen durch eine geeignete Ausgestaltung der Bohrung, welche die Gaseinlassdüse bildet, unter anderem auf einen gegebenen oder bevorzugten Betriebszustand optimal abgestellt werden, beispielsweise, ob der Motor meistens im Vollast- oder Teillastbereich betrieben wird oder häufig zwischen diesen Betriebsarten gewechselt werden muss. Oder die Gaseinlassdüse kann optimal in Abhängigkeit davon gewählt werden, ob es sich z.B. um einen Dual-Fuel Motor oder um einen reinen Gasmotor handelt. Oder die konkrete Ausgestaltung des Gaszuführsystems kann auch z.B. flexibel auf Baugrösse des Motors, dessen Leistung, Hubraum, bevorzugten Drehzahlbereich oder andere dem Fachmann an sich bekannten Bauvarianten oder Betriebszustände der Hubkolbenbrennkraftmaschine eingestellt werden. Durch Verwendung eines erfindungsgemässen Gaszuführsystems braucht somit nur noch z.B. die Gaseinlassdüse geeignet gewählt und entsprechend ausgestaltet zu werden, während das Gaseinlassventil als solches beibehalten werden kann.

Insbesondere bei Zweitakt-Grossdieselmotoren hat dabei das Gaszuführsystem nicht nur die Funktion, die in den Brennraum des Motors einzubringende Menge an Gas zu dosieren, so wie es bei Viertakt-Motoren oft eine ausreichende Anforderung ist. Bei Zweitakt-Grossdieselmotoren ist unter anderem wie bereits erwähnt neben weiteren Anforderungen die korrekte und zuverlässige Mischung des durch das Gaszuführsystem eingebrachten Gases mit der Spülluft ein entscheidender Punkt, dem durch das erfindungsgemässe Gaszuführsystem vollumfänglich Rechnung getragen wird.

Als weitere Massnahme kann gemäss der Erfindung die Gaseinlassdüse zur Verbesserung der Mischung des Brenngases mit der Spülluft bzw., um das Einbringen des Brenngases in den Zylinder weiter zu optimieren, auch eine Mehrzahl an Düsenöffnungen aufweisen. Diese sind dann jeweils als individuelle Bohrung in dem Zylinderliner vorgesehen, wobei sich vorzugsweise die individuellen Bohrungen in der Wand des Zylinderliners zu einer gemeinsamen Bohrung vereinigen, deren Mündung an der Aussenseite des Zylinderliners mit dem Gaseinlassventil zusammenwirkt.

Auch ist es möglich, dass zwei Düsenöffnungen derart verschieden ausgerichtet sind, dass das Brenngas unter zwei verschiedenen Einspritzwinkeln in den Brennraum einbringbar ist, wodurch z.B. eine bessere Verteilung im Brennraum erreicht werden kann.

Oder aber alternativ oder gleichzeitig können zwei Düsenöffnungen derart verschieden ausgebildet sein, dass das Brenngas durch die zwei Düsenöffnungen mit zwei verschiedenen Einspritzmengen und / oder mit zwei verschiedenen Strömungsgeschwindigkeiten und / oder mit zwei verschiedenen Strahlgeometrien in den Brennraum einbringbar ist. Dies lässt sich durch jeweils spezifische Ausgestaltungen der individuellen Bohrungen, z. B. mit unterschiedlichem Durchmesser speziell bei der Einmündung in den Brennraum realisieren.

Eine bevorzugte Massnahme besteht darin, dass die Gaseinlassdüse brennraumseitig als im Wesentlichen zylindrische Bohrung ausgestaltet ist, deren Achse mit der Ventilachse (V) den vorgebbaren Winkel einschliesst.

Ferner ist es bevorzugt, wenn die Gaseinlassdüse auf ihrer dem Brennraum abgewandten Seite einen sich verjüngenden Bereich aufweist, welcher in radialer Richtung in die Aussenfläche des Zylinderliners einmündet. Durch die Einmündung in radialer Richtung lässt sich ein besonders günstiger Strömungsverlauf des Brenngases insbesondere in dem Bereich realisieren, wo die Gaseinlassdüse mit dem Gaseinlassventil zusammenwirkt, also im Bereich unmittelbar stromabwärts des Ventilsitzes. Durch den in Strömungsrichtung des Brenngases gesehen sich verjüngenden Bereich der Gaseinlassdüse lässt sich eine möglichst effiziente Einbringung des Brenngases in den Brennraum realisieren.

Besonders bevorzugt ist es, wenn der sich verjüngende Bereich auf einer Seite mit einer Ausrundung ausgestaltet ist, welche in die zylindrische Bohrung der Gaseinlassdüse übergeht. Durch diese Massnahme, den Übergang von dem sich verjüngenden Bereich in die zylindrische Bohrung insbesondere auf einer Seite ausgerundet auszugestalten, lässt sich eine strömungstechnisch besonders günstige Umlenkung des Brenngases aus der radialen Richtung in die Richtung der gewünschten Einspritzung erreichen.

Ein weiterer wesentlicher Punkt betrifft die Betriebssicherheit des Motors. In dem Fall, dass das Gaszuführsystem ganz oder teilweise versagt, ist es möglich, dass z.B. eine viel zu grosse Menge an Gas in den Brennraum des Motors eingebracht wird, wenn keine geeigneten Sicherheitsmassnahmen getroffen werden, die das verhindern. Solche übermässig grossen Mengen Brenngas im Brennraum des Motors können z.B. zu unkontrollierten Explosionen im Abgassystem oder im Spülsystem eines Grossdieselmotors führen, was dazu führen kann, dass die entsprechenden Komponenten überhitzt oder gar beschädigt werden, so dass im schlimmsten Fall die ganze Maschine ausfallen kann, was insbesondere bei Schiffen auf hoher See fatale Folgen und sogar den Verlust des ganzen Schiffes zur Folge haben kann.

Aber auch wenn die Folgen einer solchen Fehlfunktion nicht so dramatisch sind können auch weniger gravierende Störungen dieser Art unerwünschte Nachteile mit sich bringen.

Wenn beispielweise aufgrund eines Defektes das Gaszuführsystem jeweils eine etwas zu grosse oder eine etwas zu kleine Menge an Gas in den Brennraum des Motors eingebracht wird, kann das die Abgaswerte, wie beispielweise den Stickoxidgehalt oder andere Abgaswerte deutlich negativ beeinflussen.

Oder aber beim Betrieb mit einem Gas, z.B. mit dem oben erwähnten LNG, kann es bei einer Fehlfunktion des Gaszuführsystems beispielweise zu einer unvollständigen Verbrennung und damit zu einem dem Fachmann als CH₄-Schlupf bekannten Phänomen führen, der zu hohe Werte aufweist. Wenn ein entsprechender Motor nun mit Gas, also in einem Gasmodus betrieben wird, können die unter einer Fehlfunktion des Gaszuführsystems bei der Verbrennung entstehenden Abgase unter anderem eine nicht unerhebliche Menge Methan und / oder Formaldehyd Emissionen enthalten, die zum Beispiel aus einer spontanen Abkühlung der Verbrennungsflamme ("flame quenching") beim Verbrennungsvorgang an der Zylinderwand resultieren können oder in einer Phase frei werden können, in der die Spülung des Zylinders mit Frischluft bei gleichzeitig nicht geschlossenem Auslassventil stattfindet oder in anderer Weise frei werden können.

Ähnliche Effekte können auftreten, wenn das Gas in nicht geeigneter Weise, z.B. unter einem ungeeigneten Druck oder in einer ungeeigneten Geometrie, des Einspritzstrahls, unter einem ungeeigneten Winkel, an einer ungeeigneten Stelle in den Brennraum oder in irgendeiner anderen Weise ungeeignet in den Brennraum des Motors eingebracht wird.

Wenn durch solche Betriebszustände z.B. die Methan Konzentration im Abgas entsprechend hoch ist, kann dadurch der sichere Betrieb des Motors ebenfalls beeinträchtigt werden. Zum Beispiel besteht die Gefahr, dass sich das Methan im Abgassystem, z.B. im Abgassammelrohr bzw. in einem Bereich vor oder gar im Turbolader entzündet. Im schlimmsten Fall kann die Entzündung des Methans im Abgassystem zur Beschädigung entsprechender Komponenten führen, die den schädlichen Wirkungen der Methangasentzündung ausgesetzt sind. Ausserdem ist Methan ein überaus wirksames Treibhausgas, das bekannterweise mindestens 25 mal wirksamer ist als Kohlendioxid, was einen signifikanten negativen Einfluss auf die Berechnung des sogenannten "Energy Efficiency Design Index" (EEDI) haben kann.

Auch können die häufig eingesetzten und sehr empfindlichen Oxidationskatalysatoren durch eine Fehlfunktion des Abgaszuführsystems und die daraus resultieren Folgen erheblich beeinträchtigt und im schlimmsten Fall bereits nach kurzer Zeit irreparabel beschädigt werden, wodurch der weitere sichere und zuverlässige Betrieb des Motors zumindest in Frage gestellt ist, im schlimmsten Fall verunmöglicht wird.

Auch diese zum Teil sehr gravierenden Probleme können durch die vorliegende Erfindung zuverlässig vermieden werden.

Dazu kann ein erfindungsgemässes Gaszuführsystem zur Überwachung eines Brenngasflusses in den Brennraum ein Kontrollsystem zur Bestimmung einer Position des Ventilkörpers umfassen, wobei das Kontrollsystem ein Wegsensor ist, insbesondere ein elektrischer oder elektromagnetischer Wegsensor, im Speziellen ein induktiver, kapazitiver oder optischer Wegsensor, so dass die jeweilige Stellung des Ventilkörpers, insbesondere ob der Ventilkörper geöffnet oder geschlossen ist, jederzeit zuverlässig detektiert werden kann.

Besonders bevorzugt ist das Kontrollsystem dabei mit einer Überwachungseinheit signalverbunden, so dass die Position des Ventilkörpers im Betriebszustand von der Überwachungseinheit erfasst werden kann, und so eine Brenngaszufuhr zur Gaseinlassdüse in Abhängigkeit von einem Kurbelwinkel der Hubkolbenbrennkraftmaschine und / oder in Abhängigkeit von einer Stellung eines Gaswechselventils der Hubkolbenbrennkraftmaschine unterbunden werden kann. Damit ist es durch die Erfindung möglich, eine Fehlfunktion des Gaszuführsystems nicht nur zu detektieren, sondern abhängig von der Fehlfunktion ein Sicherheitsprotokoll in Gang zu setzen, sodass z.B. die Brenngaszufuhr zum Gaszuführsystem automatisch unterbunden und die Hubkolbenbrennkraftmaschine bevorzugt automatisch abgeschaltet wird, besonders bevorzugt automatisch auf einen Betrieb mit einem alternativen Brennstoff z. B. einem flüssigen Brennstoff wie beispielweise Dieselöl oder Schweröl umgeschaltet wird.

Das Gaseinlasssystem ist dabei bevorzugt so ausgestaltet, dass der Ventilantrieb zum Antrieb des Ventilschafts ein mechanischer, elektrischer, oder pneumatischer Ventilantrieb, insbesondere ein hydraulischer Ventilantrieb ist, wobei zum Schliessen des Ventilkörpers besonders bevorzugt eine gegen den Ventilantrieb wirkende Rückstelleinrichtung, insbesondere in Form einer Rückstellfeder vorgesehen ist.

Der Ventilschaft ist bei einem speziellen, für die Praxis besonders wichtigen Ausführungsbeispiel in einer Führungsbohrung eines Schaftgehäuses geführt. Dabei ist die Führungsbohrung zur Abdichtung gegen den Gasdruck des Brenngases im Druckraum mit einem unter einem Abdichtdruck stehenden Hydrauliköl beaufschlagbar, welcher Abdichtdruck bevorzugt höher ist als ein Brenngasdruck des Brenngases im Druckraum, so dass ein Eindringen des Brenngases in die Führungsbohrung bzw. ein Durchströmen des Brenngases durch die Führungsbohrung im Wesentlichen verhinderbar ist.

Dass der Abdichtdruck höher ist als ein Brenngasdruck des Brenngases im Druckraum ist deshalb notwendig, weil kein Brenngas entlang des Ventilschafts unkontrolliert in weitere Komponenten des Gaszuführsystems, insbesondere nicht in einen hydraulischen Antrieb des Ventilschafts eintreten darf, also keine bzw. nur sehr gut kontrollierte kleine, technisch unwesentliche Gas-Lecks am bzw. entlang des Ventilschafts auftreten dürfen. Daher muss der Ventilschaft entsprechend zuverlässig abgedichtet werden, was bei den bisherigen System z.B. mit entsprechenden Dichtungsringen versucht wurde, was sich aber alles in allem eher als nachteilig erwiesen hat, weil die Dichtringe gegenüber dem unter Druck stehenden Brenngas entweder keine ausreichende Dichtwirkung zeigen oder auch z.B. zu schnell durch im Betriebszustand auftretende Reibungsphänomene verschleissen und damit letztlich zu teuer und zu unzuverlässig sind.

Auch diese Probleme werden durch Ausgestaltungen der vorliegenden Erfindung zuverlässig vermieden.

Der erfindungsgemässe Zylinderliner eines längsgespülten Zweitakt-Grossdieselmotors dient für ein oben eingehend beschriebenes Gaszuführsystem. Der erfindungsgemässe Zylinderliner ist insbesondere dadurch gekennzeichnet, dass er als integralen Bestandteil eine Gaseinlassdüse aufweist, welche als Bohrung in der Wand des Zylinderliners ausgestaltet ist.

Die Gaseinlassdüse ist besonders bevorzugt im Zylinderliner in einem Bereich zwischen einem oberen Totpunkt und einem unteren Totpunkt eines Kolbens der Hubkolbenbrennkraftmaschine vorgesehen, im Speziellen in einem Bereich des Zylinderliners, der vom oberen Totpunkt 20% bis 80%, bevorzugt 45% bis 65%, besonders bevorzugt 50% bis 60% des Abstands zwischen oberem Totpunkt und unterem Totpunkt entfernt ist. Es hat sich nämlich gezeigt, dass dadurch nicht nur eine noch optimalere Mischung des Brenngases mit der Spülluft erreichen lässt. Auch kann dadurch vermieden werden, dass Brenngas in heisse, sich noch im Zylinderliner befindliche Abgase eingespritzt wird, wodurch sich das Brenngas vorzeitig entzünden könnte, wie es der Fall sein kann, wenn sich das Gaszuführsystem wie aus dem Stand der Technik in der Nähe des oberen Totpunkts am Zylinderliner befindet.

Die Erfindung betrifft des Weiteren eine Hubkolbenbrennkraftmaschine mit einem oben beschriebenen Gaszuführsystem oder mit einem vorangehend beschriebenen Zylinderliner , wobei die Hubkolbenbrennkraftmaschine besonders bevorzugt ein Dual-Fuel Motor zur Verbrennung des Brenngases und alternativ zur Verbrennung eines weiteren Brennstoffs, insbesondere zur Verbrennung von Diesel oder Schweröl ist.

In einem anderen Ausführungsbeispiel kann eine erfindungsgemässe Hubkolbenbrennkraftmaschine aber selbstverständlich auch ein reiner Gasmotor sein, mit welchem nur Brenngas, also kein anderer Treibstoff verbrannt werden kann.

Nicht zuletzt betrifft die Erfindung auch ein Verfahren zum Betreiben einer Hubkolbenbrennkraftmaschine mit einem erfindungsgemässen Gaszuführsystem, wobei wie bereits beschrieben im Betriebszustand eine Fehlfunktion des Gaszuführsystems detektiert wird, die Brenngaszufuhr zum Gaszuführsystem unterbunden wird und die Hubkolbenbrennkraftmaschine bevorzugt automatisch abgeschaltet, besonders bevorzugt automatisch auf einen Betrieb mit einem alternativen Brennstoff wie beispielweise Dieselöl oder Schweröl umgeschaltet wird.

Im Folgenden wird die Erfindung an Hand der schematischen Zeichnung näher erläutert. Es zeigt:

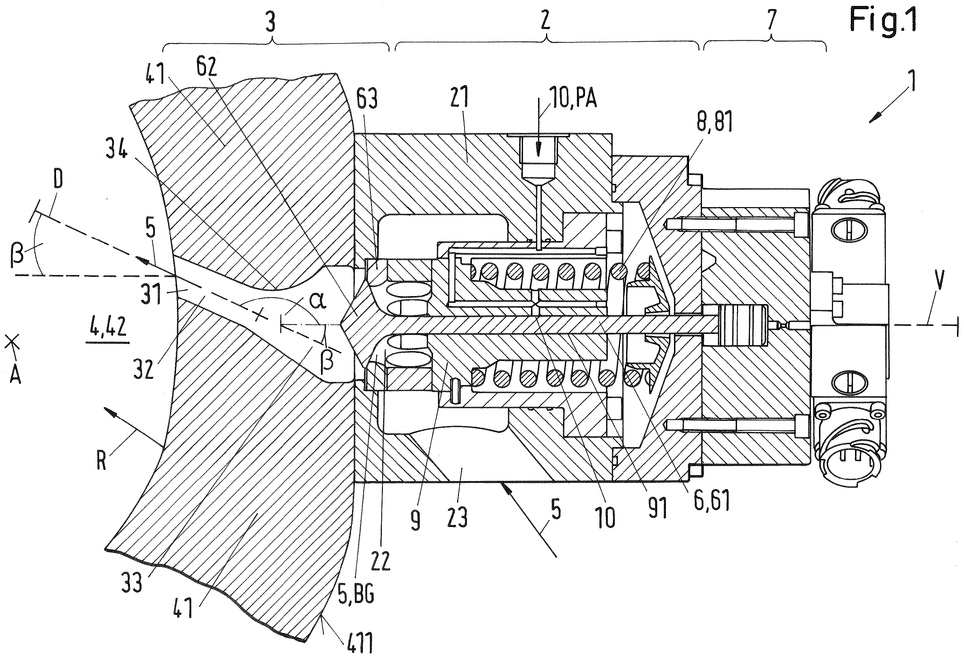

- Fig. 1: ein besonders bevorzugtes Ausführungsbeispiel eines erfindungsgemässen Gaszuführsystems mit Gaseinlassventil und Gaseinlassdüse in einer Schnittdarstellung.

Fig. 1 zeigt in einer schematischen Schnittdarstellung zur Erläuterung des Zusammenwirkens der unterschiedlichen Komponenten den prinzipiellen Aufbau eines Ausführungsbeispiels eines erfindungsgemässen Gaszuführsystems an einem Zylinderliner 41 einer Hubkolbenbrennkraftmaschine, die hier exemplarisch als Zweitakt-Grossdieselmotor mit Längsspülung ausgebildet ist und aus Gründen der Übersichtlichkeit nicht näher im Detail dargestellt ist, da dem Fachmann der prinzipielle Aufbau eines längsgespülten Zweitakt-Grossdieselmotors hinlänglich bekannt ist. Im Folgenden wird dabei das Ausführungsbeispiel des erfindungsgemässen Gaszuführsystem gesamthaft mit dem Bezugszeichen 1 bezeichnet.

Das spezielle Ausführungsbeispiel eines erfindungsgemässen Gaszuführsystem 1 gemäss Fig. 1, eingebaut in einen längsgespülten Zweitakt-Grossdieselmotor, umfasst ein Gaseinlassventil 2 mit einer Gaseinlassdüse 3 sowie einem Zylinderliner 41, und ist so ausgestaltet, dass es an einem Zylinder 4 der Hubkolbenbrennkraftmaschine derart angeordnet ist, dass ein als Treibstoff bereitgestelltes Brenngas 5 im Einbauzustand des Gaszuführsystems 1 mittels der Gaseinlassdüse 3 einem nicht näher dargestellten Brennraum 42 des Zylinders 4 zuführbar ist. Dabei umfasst das Gaseinlassventil 2 einen in einem Ventilgehäuse 21 angeordneten Druckraum 22, in welchem das Brenngas 5 über eine Gaszuführung 23 zur Bevorratung und Zufuhr in die Gaseinlassdüse 3 im Betriebszustand bereitgestellt werden kann.

Im Druckraum 22 selbst bzw. im Bereich des Druckraums 22 ist ein Ventilkörper 6 mit einem an einem Ventilschaft 61 angeordneten Ventilteller 62 sowie einem Ventilsitz 63 vorgesehen, welcher Ventilsitz 63 in einem geschlossenen Zustand des Ventilkörpers 6 mit dem Ventilteller 2 derart dichtend zusammenwirkt, dass die Zufuhr des Brenngases 5 aus dem Druckraum 22 in die Gaseinlassdüse 3 unterbunden ist.

Dazu ist der Ventilteller 2 mittels eines mit dem Ventilschaft 61 wirkverbundenen Ventilantriebs 7 vom Ventilsitz 3 abhebbar, so dass das Brenngas 5 in einem geöffneten Zustand des Ventilkörpers 6 aus dem Druckraum 22 am Ventilteller 2 vorbei der Gaseinlassdüse 3 zuführbar ist.

Gemäss der vorliegenden Erfindung ist die Gaseinlassdüse 3 integraler Bestandteil des Zylinderliners 41 und ist als Bohrung in dem Zylinderliner 41 ausgestaltet. Brennraumseitig ist die Gaseinlassdüse 3 als im Wesentlichen zylindrische Bohrung 32 ausgestaltet, wobei die Achse der zylindrischen Bohrung 32 die Düsenachse D der Gaseinlassdüse 3 ist. Die Düsenachse D ist derart unter einem vorgebbaren Winkel α in Bezug auf eine Ventilachse V des Gaseinlassventils 2 angeordnet, dass das Brenngas 5 im Betriebs- und Einbauzustand des Gaszuführsystems 1 unter einem von Null verschiedenen vorgebbaren Winkel β in Bezug auf eine radiale Richtung R des Zylinders 4 in den Brennraum 42 des Zylinder 4 einspritzbar ist. Die axiale Richtung A ist durch die Längsachse des Zylinders 4 festgelegt.

Bezüglich der radialen Richtung wird mit dem Einspritzwinkel β dabei derjenige Winkel bezeichnet, welcher der Supplementärwinkel zu dem Winkel α zwischen der Düsenachse D der Gaseinlassdüse 3 und der Ventilachse V des Gaseinlassventils 2 ist, das heisst, der Einspritzwinkel β und der Winkel α zwischen Düsenachse D und Ventilachse V ergänzen sich zu 180°, somit gilt β = 180°-α. Bevorzugt beträgt der Einspritzwinkel β zwischen 10 Grad und 80 Grad, besonders bevorzugt zwischen 10 Grad und 35 Grad, im speziellen ist der Einspritzwinkel ca. 22.5 Grad.

Bezüglich der axialen Richtung ist der Winkel β vorzugsweise 90°, das heisst das Brenngas 5 wird vorzugsweise senkrecht zur axialen Richtung A, also in der Zeichenebene von Fig. 1 bzw. parallel zur Oberfläche des Kolbens eingespritzt.

Auf ihrer dem Brennraum 42 abgewandten Seite weist die Gaseinlassdüse 3 einen sich verjüngenden Bereich 33 auf, wobei sich der Bereich 33 in Strömungsrichtung des Brenngases 5 gesehen verjüngt. Der sich verjüngende Bereich 33 mündet in radialer Richtung R in die Aussenfläche 411 des Zylinderliners 41 ein. Das heisst die Fläche der Einmündung des sich verjüngenden Bereichs 33 in die Aussenfläche 411 des Zylinderliners 41 steht senkrecht auf der Ventilachse V. Um ein möglichst optimales Durchströmen des Brenngases 5 durch die Gaseinlassdüse 3 zu ermöglichen, ist der sich verjüngende Bereich 33 auf einer Seite mit einer Ausrundung 34 ausgestaltet, welche in die zylindrische Bohrung 32 der Gaseinlassdüse übergeht. Diese Ausrundung dient dazu, das Brenngas 5 möglichst optimal aus der radialen Richtung R in die Richtung der Düsenachse D umzulenken.

Die relativ einfache Gaseinlassdüse 3 hat dabei nur eine Düsenöffnung 31. In einem anderen speziellen Ausführungsbeispiel kann die Gaseinlassdüse 3 aber durchaus auch eine Mehrzahl an Düsenöffnungen 31 aufweisen, wobei dann jede Düsenöffnung jeweils als individuelle Bohrung ausgestaltet ist. Vorzugsweise vereinigen sich diese individuellen Bohrungen inerhalg der Wand des Zylinderliners 41 zu einer gemeinsamen Bohrung, die dann mit dem Gaseinlassventil 2 zusammenwirkt.

Es können z.B. zwei Düsenöffnungen 31 derart verschieden ausgerichtet sein, dass das Brenngas 5 unter zwei verschiedenen Einspritzwinkeln in den Brennraum 42 einbringbar ist, und / oder wobei zwei Düsenöffnungen 31 auch derart verschieden ausgebildet sein können, dass das Brenngas 5 durch die zwei Düsenöffnungen 31 mit zwei verschiedenen Einspritzmengen und / oder mit zwei verschiedenen Strömungsgeschwindigkeiten und / oder mit zwei verschiedenen Strahlgeometrien in den Brennraum 42 einbringbar ist.

Das Gaseinlassventil 2 ist an der Aussenfläche 411 des Zylinderliners 41 montiert, sodass der Ventilsitz 63 die Einmündung der Gaseinlassdüse 3 in die Aussenfläche 411 überdeckt. Folglich kann das Brenngas 5 im geöffneten Zustand des Ventilkörpers 6 aus dem Druckraum 22 durch die Gaseinlassdüse 3 in den Brennraum 42 strömen. Die Montage des Gaseinlassventils 2 an der Aussenfläche 411 kann beispielsweise mittels Schrauben erfolgen. Diese sind in Fig. 1 nicht dargestellt.

Des Weiteren kann in der Praxis ein in Fig. 1 nicht explizit dargestelltes Kontrollsystem zur Überwachung eines Brenngasflusses in den Brennraum 42 und zur Bestimmung einer Position des Ventilkörpers 6 vorgesehen sein, welches Kontrollsystem besonders bevorzugt ein Wegsensor ist, insbesondere ein elektrischer oder elektromagnetischer Wegsensor, im Speziellen ein induktiver, kapazitiver oder optischer Wegsensor. Das Kontrollsystem ist mit einer Überwachungseinheit signalverbunden, so dass die Position des Ventilkörpers 6 im Betriebszustand von der Überwachungseinheit erfasst werden kann, und eine Brenngaszufuhr zur Gaseinlassdüse 3 in Abhängigkeit von einem Kurbelwinkel der Hubkolbenbrennkraftmaschine und / oder in Abhängigkeit von einer Stellung eines Gaswechselventils der Hubkolbenbrennkraftmaschine automatisch unterbunden werden kann.

Der Ventilantrieb 7 zum Antrieb des Ventilschafts 61 ist bei dem Ausführungsbeispiel gemäss Fig. 1 ein hydraulischer Ventilantrieb 7, dessen Funktion und Wirkungsweise dem Fachmann grundsätzlich bekannt sind. Zum Schliessen des Ventilkörpers 6 ist eine gegen den Ventilantrieb 7 wirkende Rückstelleinrichtung 8 in Form einer Rückstellfeder 81 vorgesehen.

Der Ventilschaft 61 ist in einer Führungsbohrung 91 eines Schaftgehäuses 9 geführt, wobei die Führungsbohrung 91 mit einem unter einem Abdichtdruck PA stehenden Hydrauliköl 10 beaufschlagbar ist, welcher Abdichtdruck PA hier höher ist als ein Brenngasdruck BG des Brenngases 5 im Druckraum 22, so dass ein Eindringen des Brenngases 5 in die Führungsbohrung 91 im Wesentlichen verhinderbar ist.

Das erfindungsgemässe Gaszuführsystem ist vorzugsweise als ein Niederdruck (low pressure) -Gassystem ausgestaltet. Damit ist gemeint, dass der Einspritzdruck, mit welchem das Brenngas 5 in den Brennraum 42 des Zylinders 4 eingespritzt wird, höchsten 100 bar (10 MPa) beträgt. Vorzugsweise ist der Einspritzdruck maximal 50 bar (5 MPa) und besonders bevorzugt höchstens 20 bar (2 MPa). Während des Betriebs der Brennkraftmaschine ist der Gasdruck, also der Druck, mit welchem das Brenngas 5 in den Zylinder 4 eingespritzt wird, üblicherweise nicht konstant, sondern kann beispielsweise in Abhängigkeit von der Last oder Drehzahl der Brennkraftmaschine variieren.

Bei dem erfindungsgemässen Gaszuführsystem 1 bzw. bei dem erfindungsgemässen Zylinderliner 41 wird in einer bevorzugten Ausführungsform ein möglichst geringer Gasdruck für die Einspritzung des Brenngases 5 in den Brennraum 42 angestrebt. So kann der maximale Einspritzdruck für das Brenngas 5 beispielsweise auch nur 15 bar oder sogar noch weniger betragen.

Ein möglichst geringer Einspritzdruck des Brenngases 5 hat natürlich unter Sicherheitsaspekten grosse Vorteile. Zudem muss das gesamte Gaszuführsystem nur für solche vergleichsweise geringen Betriebsdrücke ausgelegt sein, was insbesondere im Hinblick auf die Abdichtung des Systems, die auftretenden Kräfte, beispielsweise am Ventilsitz 63 und auch die Ausgestaltung des Ventilantriebs 7 sowie die Druckbelastung der gasführenden Leitungen bzw. ihrer Verbindungen besonders vorteilhaft ist. Auch bedarf es keiner besonderen Hochdruckkompressoren, mit denen das Brenngas 5 wie im Falle von Hochdrucksystemen auf einen Betriebsdruck von beispielsweise 350 bar oder noch höher komprimiert werden muss, was auch unter wirtschaftlichen und Kostenaspekten vorteilhaft ist.

Gerade im Hinblick auf einen möglichst geringen Einspritzdruck des Brenngases 5 ist es daher besonders bevorzugt, wenn das Gaseinlassventil 2 bzw. die Gaseinlassdüse 3 in der Zylinderwand 41 bzw. im Zylinderliner angeordnet sind und einen möglichst grossen Abstand vom oberen Totpunkt der Kolbenbewegung haben. Hierdurch lässt es sich nämlich erreichen, dass der Kompressionsdruck im Zylinder, gegen den das Brenngas 5 ja eingespritzt werden muss, noch vergleichsweise gering ist. Wenn bei einem längsgespülten Zweitakt-Grossdieselmotor der Kolben bei der Abwärtsbewegung die Spülluftschlitze freigibt, beginnt die Spülluft in den Zylinder einzuströmen. Dies geschieht solange, bis der Kolben bei seiner anschliessenden Aufwärtsbewegung die Spülluftschlitze wieder vollkommen verschlossen hat. Erst wenn dann - in der Regel nach dem Verschliessen der Spülluftschlitze - das Gaswechselventil (hier das Auslassventil) geschlossen wird und vollkommen verschlossen ist, beginnt durch die Aufwärtsbewegung des Kolbens der Kompressionsdruck im Zylinder zu steigen, bis er seinen maximalen Wert erreicht, etwa dann, wenn der Kolben im oberen Totpunkt ist.

Daher erfolgt die Brenngaseinspritzung vorzugsweise dann, wenn noch kein besonders grosser Kompressionsdruck im Zylinder herrscht und besonders bevorzugt beginnt die Einspritzung des Brenngases 5 bevor das Auslassventil geschlossen ist.

Aus diesem Grunde ist es bevorzugt, wenn die in der Zylinderwand 41 vorgesehene Gaseinlassdüse 3 bezüglich der axialen Richtung A einen möglichst grossen Abstand vom oberen Totpunkt hat. Andererseits gibt es auch konstruktive Beschränkungen, wo die Gaseinlassdüse 3 angeordnet werden kann. In der Praxis hat es sich als sehr guter Kompromiss erwiesen, wenn die Gaseinlassdüse 3 des Gaszuführsystems 1 auf einer solchen Höhe (bezüglich der axialen Richtung A) angeordnet ist, dass ihr Abstand vom oberen Totpunkt besonders bevorzugt 50% bis 60% des Abstands zwischen oberem und unterem Totpunkt beträgt.

Bezogen auf die Lage der Spülluftschlitze hat es sich als besonders bevorzugt erwiesen, wenn die Gaseinlassdüse 3 auf einer solchen Höhe (bezüglich der axialen Richtung A angeordnet ist, dass ihr Abstand von der Oberkante der Spülluftschlitze ("Oberkante" bezüglich der üblichen Gebrauchslage der Brennkraftmaschine) bevorzugt weniger als 50% und besonders bevorzugt 30% bis 40% des Abstands der Oberkante der Spülluftschlitze vom oberen Totpunkt beträgt.

Die bevorzugte Anordnung der Gaseinlassdüse 3 hat neben der Ermöglichung eines geringen Einspritzdrucks für das Brenngas 5 auch noch den Vorteil, dass bezüglich der axialen Richtung A ein grosser Abstand zwischen der Gaseinlassdüse 3 und dem Gaswechselventil bzw. dem Auslassventil existiert. Hierdurch wird es zum einen vermieden, dass ein wesentlicher Anteil des eingespritzten Brenngases 5 im unverbrannten Zustand durch das Auslassventil entweichen kann und zum anderen hat man mehr Zeit für das Schliessen des Auslassventils.

Ferner ist die bevorzugte Anordnung der Gaseinlassdüse 3 auch im Hinblick auf ein möglichst homogenes Luft/Brenngasgemisch vorteilhaft. Durch die frühe Einspritzung des Brenngases 5 bezogen auf den Kompressionshub des Kolbens haben die Spülluft und das Brenngas genügend Zeit, sich innig zu durchmischen, bevor die Verbrennung des Gemisches beginnt. Dies führt zu einem möglichst optimalen und insbesondere auch schadstoffarmen Verbrennungsprozess im Brennraum 42.

Im Hinblick auf die optimale Durchmischung von Spülluft und Brenngas 5 ist es auch vorteilhaft, wenn - wie bereits erwähnt - das Brenngas 5 bezüglich der radialen Richtung um den von Null verschiedenen Einspritzwinkel β in den Brennraum 42 des Zylinders 4 eingespritzt wird. Hierdurch erfolgt eine besonders intensive Durchmischung mit der Spülluft, die üblicherweise im Zylinder 4 bzw. im Brennraum 42 beim Kompressionshub des Kolbens drallbehaftet ist.

Es können an einem Zylinder natürlich auch zwei oder mehr solcher Gaszuführsysteme 1 bzw. zwei oder mehr Gaseinlassdüsen 3 mit Gaseinlassventilen 2 vorgesehen sein.

Es versteht sich, dass die in dieser Anmeldung beschriebenen Ausführungsbeispiele der Erfindung je nach Anwendung auch in jeder geeigneten Weise kombinierbar sind und dass insbesondere die in der Zeichnung dargestellten speziellen Ausführungsbeispiele lediglich exemplarisch zu verstehen sind. Der Fachmann erkennt sofort einfache vorteilhafte Weiterbildungen der beschriebenen Ausführungsbeispiele der Erfindung und versteht, dass auch solche einfachen Weiterbildungen selbstverständlich von der Erfindung erfasst sind.

## Patentansprüche

1. Zylinderliner für einen längsgespülten Zweitakt-Grossdieselmotor mit einer Gaseinlassdüse (3), mittels welcher ein als Treibstoff bereitgestelltes Brenngas (5) einem Brennraum (42) zuführbar ist, **dadurch gekennzeichnet, dass** die Gaseinlassdüse (3) integraler Bestandteil des Zylinderliners (41) ist und als Bohrung in dem Zylinderliner (41) ausgestaltet ist, wobei eine Düsenachse (D) der Gaseinlassdüse (3) derart unter einem vorgebbaren Winkel (β) in Bezug auf eine radiale Richtung (R) des Zylinderliners (41) angeordnet ist, dass das Brenngas (5) unter einem von Null verschiedenen Winkel in Bezug auf die radiale Richtung (R) in den Brennraum (42) einspritzbar ist.

2. Zylinderliner nach Anspruch 1, wobei die Gaseinlassdüse (3) im Zylinderliner (41) in einem Bereich zwischen einem oberen Totpunkt und einem unteren Totpunkt eines Kolbens der Hubkolbenbrennkraftmaschine vorgesehen ist, im Speziellen in einem Bereich des Zylinderliners (41), der vom oberen Totpunkt 20% bis 80%, bevorzugt 45% bis 65%, besonders bevorzugt 50% bis 60% des Abstands zwischen oberem Totpunkt und unterem Totpunkt entfernt ist.

3. Gaszuführsystem für eine Hubkolbenbrennkraftmaschine, insbesondere längsgespülter Zweitakt-Grossdieselmotor, wobei das Gaszuführsystem ein Gaseinlassventil (2) mit einer Gaseinlassdüse (3) sowie einen Zylinderliner (41) umfasst, und so ausgestaltet ist, dass es an einem Zylinder (4) der Hubkolbenbrennkraftmaschine derart angeordnet werden kann, dass ein als Treibstoff bereitgestelltes Brenngas (5) im Einbauzustand des Gaszuführsystems mittels der Gaseinlassdüse (3) einem Brennraum (42) des Zylinders (4) zuführbar ist, wobei das Gaseinlassventil (2) einen in einem Ventilgehäuse (21) angeordneten Druckraum (22) umfasst, in welchem das Brenngas (5) über eine Gaszuführung (23) zur Bevorratung und Zufuhr in die Gaseinlassdüse (3) im Betriebszustand bereitgestellt werden kann, und im Druckraum (22) ein Ventilkörper (6) mit einem an einem Ventilschaft (61) angeordneten Ventilteller (62) sowie einem Ventilsitz (63) vorgesehen ist, welcher Ventilsitz (63) in einem geschlossenen Zustand des Ventilkörpers (6) mit dem Ventilteller (2) derart dichtend zusammenwirkt, dass die Zufuhr des Brenngases (5) aus dem Druckraum (22) in die Gaseinlassdüse (3) unterbunden ist, und der Ventilteller (2) mittels eines mit dem Ventilschaft (61) wirkverbundenen Ventilantriebs (7) vom Ventilsitz (3) abhebbar ist, so dass das Brenngas (5) in einem geöffneten Zustand des Ventilkörpers (6) aus dem Druckraum (22) am Ventilteller (2) vorbei der Gaseinlassdüse (3) zuführbar ist, **gekennzeichnet dadurch, dass** der Zylinderliner (41) ein Zylinderliner gemäß Anspruch 1 ist.

4. Gaszuführsystem nach Anspruch 3, wobei die Gaseinlassdüse (3) brennraumseitig als im wesentlichen zylindrische Bohrung (32) ausgestaltet ist, deren Achse (D) mit der Ventilachse (V) den vorgebbaren Winkel (α) einschliesst.

5. Gaszuführsystem nach Anspruch 4, wobei die Gaseinlassdüse (3) auf ihrer dem Brennraum (42) abgewandten Seite einen sich verjüngenden Bereich (33) aufweist, welcher in radialer Richtung (R) in die Aussenfläche (411) des Zylinderliners (41) einmündet.

6. Gaszuführsystem nach Anspruch 5, wobei der sich verjüngende Bereich (33) auf einer Seite mit einer Ausrundung (34) ausgestaltet ist, welche in die zylindrische Bohrung der Gaseinlassdüse (3) übergeht.

7. Gaszuführsystem nach einem der Ansprüche 3-6, wobei zur Überwachung eines Brenngasflusses in den Brennraum (42) ein Kontrollsystem zur Bestimmung einer Position des Ventilkörpers (6) vorgesehen ist.

8. Gaszuführsystem nach Anspruch 7, wobei das Kontrollsystem ein Wegsensor ist, insbesondere ein elektrischer oder elektromagnetischer Wegsensor, im Speziellen ein induktiver, kapazitiver oder optischer Wegsensor ist.

9. Gaszuführsystem nach einem der Ansprüche 7 oder 8, wobei das Kontrollsystem mit einer Überwachungseinheit signalverbunden ist und die Position des Ventilkörpers (6) im Betriebszustand von der Überwachungseinheit erfasst werden kann, so dass eine Brenngaszufuhr zur Gaseinlassdüse (3) in Abhängigkeit von einem Kurbelwinkel der Hubkolbenbrennkraftmaschine und / oder in Abhängigkeit von einer Stellung eines Gaswechselventils der Hubkolbenbrennkraftmaschine unterbunden werden kann.

10. Gaszuführsystem nach einem der Ansprüche 3-9, wobei der Ventilantrieb (7) zum Antrieb des Ventilschafts (61) ein mechanischer, elektrischer, oder pneumatischer Ventilantrieb (7), insbesondere ein hydraulischer Ventilantrieb (7) ist.

11. Gaszuführsystem nach einem der Ansprüche 3-10, wobei zum Schliessen des Ventilkörpers (6) eine gegen den Ventilantrieb (7) wirkende Rückstelleinrichtung (8), insbesondere in Form einer Rückstellfeder (81) vorgesehen ist.

12. Gaszuführsystem nach einem der Ansprüche 3-11, wobei der Ventilschaft (61) in einer Führungsbohrung (91) eines Schaftgehäuses (9) geführt ist.

13. Gaszuführsystem nach Anspruch 12, wobei die Führungsbohrung (91) mit einem unter einem Abdichtdruck (PA) stehenden Hydrauliköl (10) beaufschlagbar ist, welcher Abdichtdruck (PA) höher ist als ein Brenngasdruck (BG) des Brenngases (5) im Druckraum (22), so dass ein Eindringen des Brenngases (5) in die Führungsbohrung (91) im Wesentlichen verhinderbar ist.

14. Hubkolbenbrennkraftmaschine mit einem Gaszuführsystem nach einem der Ansprüche 3 bis 13 oder einem Zylinderliner nach einem der Ansprüche 1 oder 2, wobei die Hubkolbenbrennkraftmaschine ein Dual-Fuel Motor zur Verbrennung des Brenngases (5) und alternativ zur Verbrennung eines weiteren Brennstoffs, insbesondere zur Verbrennung von Diesel oder Schweröl ist.

15. Verfahren zum Betreiben einer Hubkolbenbrennkraftmaschine nach Anspruch 14 wobei eine Fehlfunktion des Gaszuführsystems (1) detektiert wird, die Brenngaszufuhr zum Gaszuführsystem (1) unterbunden wird und die Hubkolbenbrennkraftmaschine bevorzugt automatisch abgeschaltet, besonders bevorzugt automatisch auf einen Betrieb mit einem alternativen Brennstoff wie beispielweise Dieselöl oder Schweröl umgeschaltet wird.

## Claims

1. A cylinder liner for a longitudinally scavenged two-stroke large diesel engine with a gas inlet nozzle (3) by means of which a combustion gas (5) provided as fuel can be supplied to a combustion chamber (42), **characterized in that** the gas inlet nozzle (3) is an integral part of the cylinder liner (41) and is designed as a bore in the cylinder liner (41), wherein a nozzle axis (D) of the gas inlet nozzle (3) is arranged at a predeterminable angle (β) with respect to a radial direction (R) of the cylinder liner (41) in such a way that the combustion gas (5) can be injected into the combustion chamber (42) at an angle other than zero with respect to the radial direction (R).

2. A cylinder liner according to claim 1, wherein the gas inlet nozzle (3) is provided in the cylinder liner (41) in an area between an upper dead center and a lower dead center of a piston of the reciprocating internal combustion engine, in particular in an area of the cylinder liner (41), which is spaced apart from the upper dead center by 20% to 80%, preferably by 45% to 65%, particularly preferably by50% to 60% of the spacing between the upper dead center and the lower dead center.

3. A gas supply system for a reciprocating piston internal combustion engine, in particular a longitudinally scavenged two-stroke large diesel engine, wherein the gas supply system comprises a gas inlet valve (2) having a gas inlet nozzle (3), as well as a cylinder liner (41) and is configured in such a way that it can be arranged at a cylinder (4) of the reciprocating piston internal combustion engine such that a combustion gas (5) made available as fuel can be supplied to a combustion space (42) of the cylinder (4) in the installed state of the gas supply system by means of the gas inlet nozzle (3), wherein the gas inlet valve (2) comprises a pressure space (22) arranged in a valve housing (21) in which pressure space the combustion gas (5) can be made available for storage and supply into the gas inlet nozzle (3) in the operating state via a gas supply (23), and wherein a valve body (6) having a valve plate (62) arranged at a valve shaft (61) and a valve seat (63) is provided in the pressure space (22), which valve seat (63) cooperates with the valve plate (2) in a closed state of the valve body (6) in a sealing manner in such a way that the supply of the combustion gas (5) from the pressure space (22) into the gas inlet nozzle (3) is prevented, and wherein the valve plate (2) can be lifted from the valve seat (3) by means of a valve drive (7) operatively connected to the valve shaft (61) such that the combustion gas (5) can be supplied from the pressure space (22) past the valve plate (2) to the gas inlet nozzle (3) in an open state of the valve body (6), **characterized in that** the cylinder liner (41) is a cylinder liner according to claim 1.

4. A gas supply system in accordance with claim 3, wherein the gas inlet nozzle (3) is configured at the combustion space side as a substantially cylindrical bore (32) whose axis (D) includes the predefined angle (α) with the valve axis (V).

5. A gas supply system in accordance with claim 4, wherein the gas inlet nozzle (3) has a tapering region (33) at its side remote from the combustion space (42), the region opening into the outer surface (411) of the cylinder liner (41) in the radial direction (R).

6. A gas supply system in accordance with claim 5, wherein the tapering region (33) is configured at a side with an internal radius (34) which transitions into the cylindrical bore of the gas inlet nozzle (3).

7. A gas supply system in accordance with anyone of the claims 3 to 6, wherein, for monitoring a combustion gas flow into the combustion space (42), a control system for determining a position of the valve body (6) is provided.

8. A gas supply system in accordance with claim 7, wherein the control system is a path sensor, in particular an electrical or electromagnetic path sensor, more specifically an inductive, capacitive or optical path sensor.

9. A gas supply system in accordance with any one of the claims 7 or 8, wherein the control system is connected to a monitoring unit in a signal conducting manner and the position of the valve body (6) can be detected in the operating state by the monitoring unit, such that a supply of combustion gas to a gas inlet nozzle (3) can be interrupted in dependence on a crank angle of the reciprocating piston internal combustion engine and/or in dependence on a position of a gas exchange valve of the reciprocating piston internal combustion engine.

10. A gas supply system in accordance with anyone of the claims 3 to 9, wherein the valve drive (7) for the drive of the valve shaft (61) is a mechanical, electrical, or pneumatic valve drive (7), in particular a hydraulic valve drive (7).

11. A gas supply system in accordance with anyone of the claims 3 to 10, wherein a restoring unit (8), in particular in the form of a return spring (81), acting against the valve drive (7) is provided for closing the valve body (6).

12. A gas supply system in accordance with anyone of the claims 3 to 11, wherein the valve shaft (61) is guided in a guide bore (91) of a shaft housing (9).

13. A gas supply system in accordance with claim 12, wherein the guide bore (91) can be impinged with a hydraulic oil (10) pressurized at a sealing pressure (PA), said sealing pressure (PA) being higher than a combustion pressure (BG) of the combustion gas (5) in the pressure space (22), such that an entry of the combustion gas (5) into the guide bore (91) can essentially be prevented.

14. A reciprocating piston internal combustion engine having a gas supply system in accordance with any one of the claims 3 to 13 or a cylinder liner in accordance with any one of the claims 1 or 2, wherein the reciprocating piston internal combustion engine is a dual fuel engine for combustion of the combustion gas (5) and alternatively for the combustion of a further fuel, in particular for the combustion of diesel or heavy crude oil.

15. A method of operating a reciprocating piston internal combustion engine in accordance with claim 14, wherein an error function of the gas supply system (1) is detected, the gas supply to the gas supply system (1) is interrupted and the reciprocating piston internal combustion engine is preferably automatically switched off, particularly preferably is automatically transferred into a mode of operation having an alternative fuel, such as, for example diesel oil or heavy crude oil.

## Revendications

1. Une chemise de cylindre pour un gros moteur diesel à deux temps purgé longitudinalement avec une buse d'entrée de gaz (3), au moyen duquel un gaz combustible (5) fourni comme combustible peut être amené à une chambre de combustion (42), **caractérisé en ce que** la buse d'entrée de gaz (3) fait partie intégrante de la chemise de cylindre (41) et est conçu comme un alésage dans la chemise de cylindre (41), dans laquelle un axe de buse (D) de la buse d'entrée de gaz (3) est disposé selon un angle prédéterminé (β) par rapport à une direction radiale (R) de la chemise de cylindre (41), que le gaz combustible (5) peut être injecté dans la chambre de combustion (42) à un angle différent de zéro par rapport à la direction radiale (R).

2. Une chemise de cylindre selon la revendication 1, dans laquelle la buse d'entrée de gaz (3) est prévue dans la chemise de cylindre (41) dans une région située entre un point mort supérieur et un point mort inférieur d'un piston du moteur à combustion interne alternatif, en particulier dans une région de la chemise de cylindre (41), qui est éloigné du point mort supérieur de 20% à 80%, de préférence de 45% à 65%, surtout de préférence de 50% à 60% de la distance entre le point mort supérieur et le point mort inférieur.

3. Un système d'alimentation en gaz pour un moteur à combustion interne alternatif, en particulier un grand moteur diesel à deux temps purgé longitudinalement, dans lequel le système d'alimentation en gaz comprend une vanne d'entrée de gaz (2) ayant une buse d'entrée de gaz (3) et une chemise de cylindre (41), et est configuré de telle sorte qu'il puisse être disposé sur un cylindre (4) du moteur à combustion interne alternatif de telle sorte, qu'un gaz combustible (5) prévu comme combustible peut être amené à une chambre de combustion (42) du cylindre (4) au moyen de la buse d'entrée de gaz (3) à l'état monté du système d'alimentation en gaz, dans lequel la vanne d'entrée de gaz (2) comprend une chambre de pression (22) disposée dans un boîtier de vanne (21), dans laquelle le gaz combustible (5) peut être fourni par l'intermédiaire d'une alimentation en gaz (23) à la buse d'entrée de gaz (3) pour le stockage et l'alimentation en état de fonctionnement, et un corps de vanne (6) avec une plaque de vanne (62) disposée sur une tige de vanne (61) et un siège de vanne (63) est prévu dans la chambre de pression (22), lequel siège de vanne (63) dans un état fermé du corps de vanne (6) coopère avec la plaque de vanne (2) d'une manière étanche de telle sorte que l'alimentation du gaz combustible (5) de la chambre de pression (22) dans la buse d'entrée de gaz (3) est empêchée, et la plaque de vanne (2) peut être soulevée du siège de vanne (3) au moyen d'un commande de vanne (7) relié de manière opérationnelle à la tige de vanne (61), de telle sorte que le gaz combustible (5) peut être fourni à la buse d'entrée de gaz (3) de la chambre de pression (22) au-delà de la plaque de vanne (2) à l'état ouvert du corps de vanne (6), **caractérisé en ce que** la chemise de cylindre (41) est une chemise de cylindre selon la revendication 1.

4. Un système d'alimentation en gaz selon la revendication 3, dans lequel la buse d'entrée de gaz (3) est conçue du côté de la chambre de combustion sous la forme d'un alésage sensiblement cylindrique (32), dont l'axe (D) avec l'axe de la vanne (V) comprend l'angle prédéfinissable (a).

5. Un système d'alimentation en gaz selon la revendication 4, dans lequel la buse d'entrée de gaz (3) a une région conique (33) sur son côté opposé à la chambre de combustion (42), qui se rétrécit dans la surface extérieure (411) de la chemise de cylindre (41) dans la direction radiale (R).

6. Un système d'alimentation en gaz selon la revendication 5, dans lequel la région conique (33) est conçue avec un congé (34) sur un côté, lequel congé se fond dans l'alésage cylindrique de la buse d'entrée de gaz (3).

7. Un système d'alimentation en gaz selon l'une des revendications 3 à 6, dans lequel un système de commande pour déterminer une position du corps de la vanne (6) est prévu pour surveiller un flux de gaz combustible dans la chambre de combustion (42).

8. Un système d'alimentation en gaz selon la revendication 7, dans lequel le système de commande est un capteur de déplacement, en particulier un capteur de déplacement électrique ou électromagnétique, en particulier un capteur de déplacement inductif, capacitif ou optique.

9. Un système d'alimentation en gaz selon l'une des revendications 7 ou 8, dans lequel le système de commande est relié par signal à une unité de surveillance et la position du corps de vanne (6) peut être détectée par l'unité de surveillance dans l'état de fonctionnement de sorte qu'une alimentation en gaz de combustion à la buse d'entrée de gaz (3) peut être empêchée en fonction d'un angle de vilebrequin du moteur à combustion interne alternatif et / ou en fonction d'une position d'une vanne d'échange de gaz du moteur à combustion interne alternatif.

10. Un système d'alimentation en gaz selon l'une des revendications 3 à 9, dans lequel le commande de vanne (7) pour commander la tige de vanne (61) est une commande de vanne (7) mécanique, électrique ou pneumatique (7), en particulier une commande de vanne hydraulique (7).

11. Un système d'alimentation en gaz selon l'une des revendications 3 à 10, dans lequel un dispositif de rappel (8) agissant contre la commande de vanne (7), en particulier sous la forme d'un ressort de rappel (81), est prévu pour fermer le corps de vanne (6).

12. Un système d'alimentation en gaz selon l'une des revendications 3 à 11, dans lequel la tige de vanne (61) est guidé dans un alésage de guidage (91) d'un boîtier d'arbre (9).

13. Un système d'alimentation en gaz selon la revendication 12, dans lequel l'alésage de guidage (91) peut être appliqué avec une huile hydraulique (10) sous une pression d'étanchéité (PA), ladite pression d'étanchéité (PA) est supérieure à une pression de gaz combustible (BG) du gaz combustible (5) dans la chambre de pression (22), de sorte qu'une pénétration du gaz combustible (5) dans l'alésage de guidage (91) peut être sensiblement empêchée.

14. Un moteur à combustion interne alternatif avec un système d'alimentation en gaz selon l'une des revendications 3 à 13 ou une chemise de cylindre selon l'une des revendications 1 ou 2, dans lequel le moteur à combustion interne alternatif est un moteur à deux carburants pour la combustion du gaz de combustion (5) et alternativement pour la combustion d'un autre carburant, en particulier pour la combustion de diesel ou de pétrole lourd.

15. Un procédé de fonctionnement d'un moteur à combustion interne alternatif selon la revendication 14, dans lequel un dysfonctionnement du système d'alimentation en gaz (1) est détecté, l'alimentation en gaz combustible du système d'alimentation en gaz (1) est empêchée et le moteur à combustion interne alternatif est de préférence coupé automatiquement, de préférence automatiquement commuté sur un fonctionnement avec un carburant de substitution tel que le diesel ou le pétrole lourd.
